# EUROPEAN PATENT APPLICATION

(11) **EP 0 883 294 A1**
(43) Date of publication of application: **09.12.1998**
(21) Application number: 96915244.6
(22) Date of filing: 29.02.1996
(51) Int. Cl.: H04N 5/64

(54) **INFORMATION VIDEO SYSTEM**

(30) Priority: 22.02.1996 RU 96102870
(71) Applicant: Judenich, Gennady Ivanovich, Moscow, 113191 (RU)
(72) Inventor: Judenich, Gennady Ivanovich, Moscow, 113191 (RU)
(74) Representative: Goddar, Heinz J., Dr.
(86) International application number: RU9600047
(87) International publication number: WO9731478

(57) **Abstract**

The information video system comprises a multisection screen (1) with at least two cells each of which can rotate and/or move in space in at least one direction and which form a three-dimensional multiple plane screen system which alters in space. Each cell of the multisection screen (1) is made up of at least one television receiver (2-5) connected to the programmable control device (10) to which image sources (16-19) are connected via a distribution unit (12), said image sources corresponding to each television receiver (2-5) and displaying their own information on each cell or combination of cells.

## Description

### Field of the invention

The invention relates in general to popular entertainment equipment and more specifically it relates to video information apparatuses.

### Background of the invention

A plurality of systems and arrangements are known heretofore that allow to establish a theatrical-entertainment performance with a possibility of combining various kinds of entertainment into a single performance together with cinematography or television, and so on.

One state-of-the-art multicamera television unit is known to comprise three television projection cameras from which the image is delivered, through a video distributor and a monitoring unit, to the multiscreen television set which comprises a plurality of television monitors arranged so that their screens are coplanar (ref. to, e.g., Matsushita Electric Industrial Co., Ltd. Japan, "National Multi Vision").

The aforesaid multiscreen arrangement may be used so that each of its sections receives its own image.

Since the whole screen is of a sectional design, a neutral strip is perceived by the viewers between the screen components, which is superposed on an entire image and interferes with its perception as a whole.

In addition, said system is a two-dimensional one and cannot therefore create an illusion of three-dimensional space, whereby use of said system is limited only to the possibilities of a television show, wherein a three-dimensional image is established due to its forming on a magnetic video tape.

There is also extensively known a principle of staging gala performances, wherein a theatrical or concert performance is integrated with a motion-picture or video image on a screen. Such a screen can either appear as a polyscreen or be made up of a number of individual screens.

An extension of the functional capabilities of a stage area is restricted to the use in such systems of flat projection screens onto which a film has been exhibited, which are separately placed in the stage plane.

An increase in the screen area first to a wide size, then to a panorama (circarama inclusive) did not, however, increase the space capabilities of the screen (I.B.Gordiychuk, "Cameraman's guide", 1979, Iskusstvo, Moscow, pp. 64-66).

There is known a composite-image projection apparatus having a curved screen onto which three individual projectors deliver three separate images which are perceived by the viewers as a single continuous image in a horizontal plane.

This projection method is used to exhibit wide-screen films and panoramic films.

This apparatus cannot create several grounds of image in a horizontal plane and a vertical plane at a time by means of quick interchange of images in keeping with producer's conception, which reduce an effect of artistic and informative impression, as well as a pungency of information perception by the viewers [US. A.2898804].

A lensless system for forming a stage scenery is known, including a row of vertical semi-transparent screens arranged so as to outline a stage space.

Transparencies are imaged on these screens by means of transparency projectors which are placed behind the screens in two parallel planes and form the foreground and the second ground of an image.

A drawback of this system is an immobility of the formed images, sharp interchange of separate fragments of the scenery in case of necessity, a lack of action, as well as of an illusion that what is happening at the stage is real [US.A3192827].

One method is known as well as one apparatus being an embodiment of the method of combining a live or recorded image with a three-dimensional scenery, which allows to create the illusion of depth with no need to use a number of exhibitory screens.

The said method includes a phase of forming the first scenery comprising a plurality of fragments of the three-dimensional scenery, and a phase of forming the second scenery comprising a plurality of properties, each corresponding to one of the fragments of the scenery. The second scenery serves as a background for live actors and other desirable images incorporated into a three-dimensional stage. The properties corresponding to the three-dimensional stage are placed in the second scenery. The properties of the second scenery are shaded so that they are invisible when filming. A beam splitter is placed in the foreground of the three-dimensional scenery so that said splitter makes a fixed angle with a horizontal plane and a monitor is placed so that a video image of the second scenery is reflected onto the beam splitter. An actor is filmed against a background of the second scenery with the shaded properties. A recorded image being reflected onto the beam splitter is reproduced on the monitor to create an illusion that said image is interconnected with the properties of the three-dimensional scenery. A live image can be delivered directly onto the monitor to project it onto the beam splitter.

To this end, a composite projector is used, said projector being composed of three monitors, each receiving its own image from diverse cameras. In this event, gaps are formed between said monitors so that the image of a figure moving from one monitor to another disappears in a space of said gaps, which hinder perception of the image as a whole. In order to minimize a discontinuity of the image being perceived by the viewers and create an illusion of happening, additional fragments of the three-dimensional scenery are placed in said gaps, which introduce a monotony in a decorative design of the general plane that serves as a background for the performance; the viewers perceive information in a confined stage space and no illusion of the three-dimensional space is created [US. A. 4738522].

The illusion of reality of what is going at the stage is not achieved also in case of using a sole monitor being moved concurrently with a motion of the projected image across the surface of the beam splitter, and the viewers are able to follow only one actor moving in one direction with their eyes.

The monitor is arranged so that an image equivalent to the image on said beam splitter is formed in case the monitor is suspended in an auditorium.

An angle of said monitor with the beam splitter, being once selected, is then constant. In this event the number of viewers who perceive the complete information is limited as the angle which result in the maximum effect is predetermined.

In addition, the viewers perceive an image of any subject displayed on the beam splitter in one horizontal plane only and against an invariable background. The three-dimensional effect is achieved by means of the recorded image.

Thus, this apparatus did not allow to create a multiplane and, at the same time, three-dimensional image of a subject in action.

It is possible to show a moving actor against a three-dimensional scenery background, making use of a computer-controlled tracking monitor, however, in this event the viewer does not feel a reality of what is going on at the stage through a static character of the three-dimensional scenery. A volume of received information is also limited.

Thus, the projection system is a monoplane one, makes use of a recorded or live image in combination with three-dimensional scenery and cannot create an illusion of a three-dimensional space; in this connection use of the system is restricted to theatrical performances.

The most similar to the herein-proposed video information apparatus is the one, comprising a multisection screen having two or more cells, each of them or any combination thereof receiving its own information from at least one projector used as an information source. The cells of the multisection screen are spatially turnable and/or displaceable in at least one direction and establish a spatially changeable three-dimensional multiplane screen system [US.A.4962420; RF.A.2002486].

The required stage scenery and properties may be placed before each of the cells of the spatially changeable three-dimensional multiplane screen system, thus establishing a three-dimensional stage space.

Such a video apparatus makes use of projection screens which somewhat complicates said apparatus and renders it impossible to employ therein a distant television signal. Hence the mentioned-above apparatus fails to utilize all merits of television sets, that are, an ability to produce a certain artistic and informative impression, as well as a viewer's participation effect when watching information remotely.

### Object and summary of the invention

It is therefore an object of the invention to provide an extended range of application of television sets with a concurrent increase in the effect of an artistic and informative impression and a participation effect when an informational program is watched on a television set by a numerous audience.

The foregoing object is accomplished due to the fact that in a video information apparatus, comprising a multisection screen having at least two cells, each of them being spatially turnable and/or displaceable in at least one direction, and which establish a spatially changeable three-dimensional multiplane screen system, wherein each of the cells of the multisection screen or any combination of said cells receives its own information from at least one source of information, according to the invention, each of the cells of the multisection screen is essentially at least one television set connected to a programmable control device to which the sources of image corresponding to each television set are connected through a video distributor.

Whenever two or more television sets are provided in each cell, they may establish a matrix of television sets, comprising at least one horizontal row of two or more television sets.

It is expedient that two television sets in each matrix are positioned in the foreground and spaced somewhat apart from each other, and that their screens are vertically coplanar, whereas a third television set is located in the second ground and its screen occupies at least partly the space between screens of the two television sets located in the foreground.

It is likewise expedient that the two television sets located in the foreground are baseplate-mounted with a possibility of simultaneously swiveling about a vertical axis in opposite directions and/or simultaneously moving in a horizontal plane.

It is favorable that the third television set located in the second ground is displaceable either horizontally or vertically.

It is reasonable that the matrix of the television sets is formed by three pairs of television sets placed on a common baseplate pairwise, one set spaced somewhat apart from the other, and one pair behind the other, and that is comprises also at least one additional television set interposed between the sets of the same pair and displaceable in the plane of the common baseplate from one pair of the television sets to other pairs, while the screen of said additional television set occupies at least partly the space between the screens of the television sets of the respective pair.

The additional television set may be vertically movable, and at least two television sets may be positioned above the two foreground television sets or above at least any one of the pairs of television sets in such a manner as to form a "visor", and the television sets forming said "visor" may be tiltable.

In addition, it is expedient that the matrix of television sets has at least three horizontal rows arranged one above another, each row comprising at least three television sets having coplanar screens, the screen of one or of a group of the television sets situated in the center of the matrix lies in the plane forming the second ground with respect to the plane of the screens of the matrix, and the surfaces of the cabinets of the television sets surrounding the central television set or a group of the central television sets, are mirror-reflecting.

It appears also favorable that the matrix has five horizontal rows each comprising five television sets, and the central group formed by nine television sets has in its center one television set whose screen is situated in the third ground with respect to the screens of the television sets the matrix is comprised of, and the surfaces of the cabinets of the television sets surrounding said central television set and facing the latter are mirror-reflecting.

It is expedient that a programmable control device comprises a converter for converting an analog video signal into a digital code, which is connected to a source of image, a digital computer connected to the output of said video-signal analog-to-digital converter and producing a video signal for a respective television set of the video information apparatus, said computer comprising a divider of a video signal into separate fragments, connected to the output of the said video-signal analog-to-digital converter, a network memory unit connected to the output of the video-signal divider and having a programmable control circuit, and a plurality of channels for transmitting the respective fragments of video information onto the own screen of the respective television set, the number of said channels corresponding to the number of television sets in the video information apparatus, each of said channels comprising an input network board connected to the output of the network memory unit, a converter for converting a digital code into an analog video signal that corresponds to a fragment of video information, said converter being connected to the output of the input network board, and a video-signal reader unit connected to the output of said video-signal digital-to-analog converter and to the input of the respective television set.

The digital computer may also comprise a graphic information producing unit and a graphic information converter unit whose input is connected to the output of the graphic information producing unit, and the output thereof is connected to the input of the network memory unit.

The mentioned video information apparatus allows to use television sets not only in keeping with their specific purpose, i.e., for receiving broadcasts, but also for creating a multisection television screen on which a large amount of information is demonstrated simultaneously for a large audience. Moreover, the participation effect is enhanced, as well as a viewer's subjective effect of artistic and informative impression.

### Brief description of the drawings

In what follows the proposed technical solution is illustrated in the disclosure of exemplary embodiments thereof with reference to the accompanying drawings, wherein:
FIG.1 shows a video information apparatus, according to the invention;
FIG.2 shows a variant of arrangement of television sets in the video information apparatus of FIG.1, according to the invention;
FIG.3 shows another variant arrangement of television sets in three planes, according to the invention;
FIG.4 shows an embodiment of a video information apparatus having a "visor" made up of two television sets, according to the invention;
FIG.5 shows another embodiment of a video information apparatus having a "visor", according to the invention;
FIG.6 shows a video information apparatus having means for moving television sets, according to the invention;
FIG.7 shows another embodiment of the means for moving television sets in the video information apparatus, according to the invention;
FIG.8 shows the layout of television sets in the video information apparatus, according to the invention;
FIG.9 shows another layout of television sets in the video information apparatus, according to the invention;
FIG.10 shows a further layout of television sets in the video information apparatus, according to the invention;
FIG.11 shows a schematic diagram of the programmable control device of the video information apparatus, according to the invention;
FIG.12 shows another embodiment of the programmable control device of the video information apparatus, according to the invention; and
FIG.13a, b illustrates how an image is produced on the screens of the video information apparatus, according to the invention.

### Description of the preferred embodiment

Considered hereinbelow is an embodiment of the present invention for using in theatrical entertainment. However, its use for other purposes, simulating and exercising ones inclusive, involves no substantial modifications.

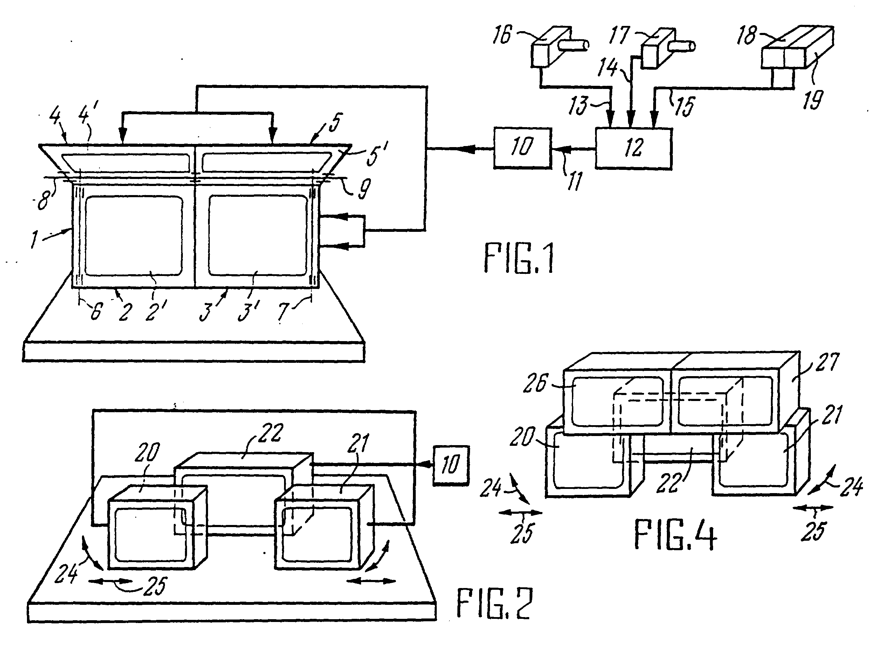

The video information apparatus, according to the invention, comprises a multisection screen 1 (FIG.1) having a plurality of cells. As shown in the embodiment presented in FIG.1, the multisection screen 1 has two longitudinal cells 2 and 3, and two transverse cells 4 and 5. All the cells of the screen 1 are spatially turnable and/or displaceable in at least one of the spatial dimensions, with the result that a spatially changeable three-dimensional multiplane screen system is established. The spatial arrangement of the cells of the screen 1 can be changed for one of them or for a group of cells in any arbitrary direction depending on the information arriving at each of the cells, and on the sell shape, as well as on the established effect of perception of said information.

Considered hereinbelow are techniques for establishing a multiplane system, wherein one or more cells are spatially displaced or turned. However, possible combinations of the spatial arrangement of the cells are by no means reduced to the exemplary embodiments of the present invention nor all attainable combinations of the types of cells within the limits of one screen are considered herein. The multiplane screen system is considered again with reference to a mass stage performance alone which does not exhaust its possible application as has been stated hereinbefore.

FIG.1 presents, as has been stated hereinabove, the screen 1 having four cells 2, 3, 4, and 5 provided with respective pivots 6, 7, 8, and 9 round which they are turnable through a certain angle. The pivots 6 and 7 of the cells 2 and 3 are arranged lengthwise the side edge of the screen 1, and the pivots 8 and 9 of the cells 4 and 5 are arranged along the upper edge of the screen 1.

The cell 5 is shown revolved through 120° relative to the plane of the longitudinal cells 2 and 3.

Each of the cells 2, 3, 4, and 5 is in fact at least one television set 2', 3', 4', and 5'. As seen in FIG.1, each of the cells 2, 3, 4, and 5 has one of the television sets 2', 3', 4', and 5', and all the cells are connected to a programmable control device 10. An input 11 of the control device 10 is connected to the output of a video distributor 12 to inputs 13, 14, and 15 of which the corresponding sources of image are connected, that are, video cameras 16, 17 and video tape recorders 18, 19.

When two or more television sets are provided in each cell, they establish a matrix of television sets, comprising at least one horizontal row of two or more television sets.

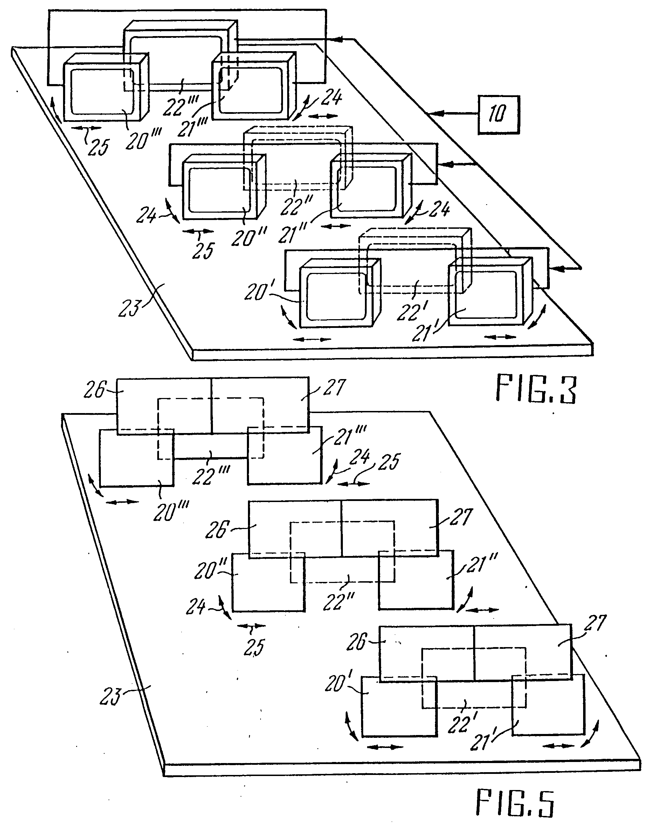

FIG.2 shows schematically the matrix of, e.g., the cell 2, said matrix being composed of three television sets 20, 21, and 22 which are so arranged that their screens are located in at least two vertical planes, that are, the screens of the television sets 20, 21 are in one vertical plane and are situated in the foreground and spaced somewhat apart from each other, the screen of the television set 22 lies in another vertical plane and the set is situated in the second ground so that its screen occupies, at least partly, the space between the screens of the television sets 20 and 21.

The television sets 20 and 21 are mounted on a baseplate 23, so as to swivel about a vertical axis in the above-mentioned directions indicated with arrows 24, or with a possibility of simultaneously moving in a horizontal plate in the direction facing an arrow 25. Horizontal displacement of the television sets 20, 21 or their swiveling about a vertical axis in the aforesaid directions changes the space confined therebetween, with the result that the screen of the television set 22 is overlapped, to some extent or another, by the television sets 20 and 21, which enable to modify the amount of information delivered to the audience from the screen of the television set 22, as well as from the screens of the television sets 20, 21 upon their swiveling.

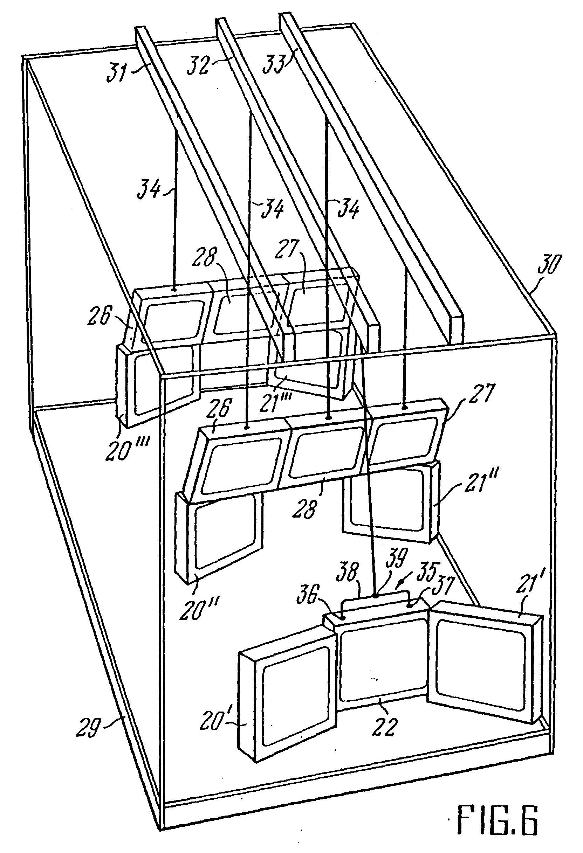

The screen system may be built up of a greater number of television sets as well. FIG.3 illustrates an exemplary formation of the screen system from three pairs of television sets 20' and 21', 20'' and 21'', 20''' and 21''' which are arranged in each pair similarly to FIG.2 and are horizontally displaceable or can swivel about a vertical axis (FIG.3). One pair of the television sets is placed somewhat apart from the other pair so as to establish a three-dimensional screen system, wherein pairs of television sets are placed in the first, second, and third grounds.

The aforesaid screen system has an additional television set which assumes, depending on the order of information delivery to the audience, the position of either the television set 22' in the pair of the television sets 20', 21' in the foreground or the television set 22'' in the pair of the television sets 20'', 21'' in the second ground or else the television set 22''' in the pair of the television sets 20''', 21''' in the back-most third ground, thus forming a single television screen.

Since all the television sets 20', 20'', 20''', 21' ,21'', 21''', and 22 can move or swivel according to a preset program in the directions indicated with arrows 24, 25, the number of possible combinations and relative positions of the screens of said television sets is so great as to allow of boundlessly varying the size and shape of the established television screen and hence to increase far more, as compared with the known screen systems, the amount of information perceived by the audience at a time. Moreover, a single television screen made up of a number of the screens of television sets contributes to a larger close-up picture, adds to the effect of an artistic performance due to its getting more dynamic and many-sided, and provides depth-echeloned picture.

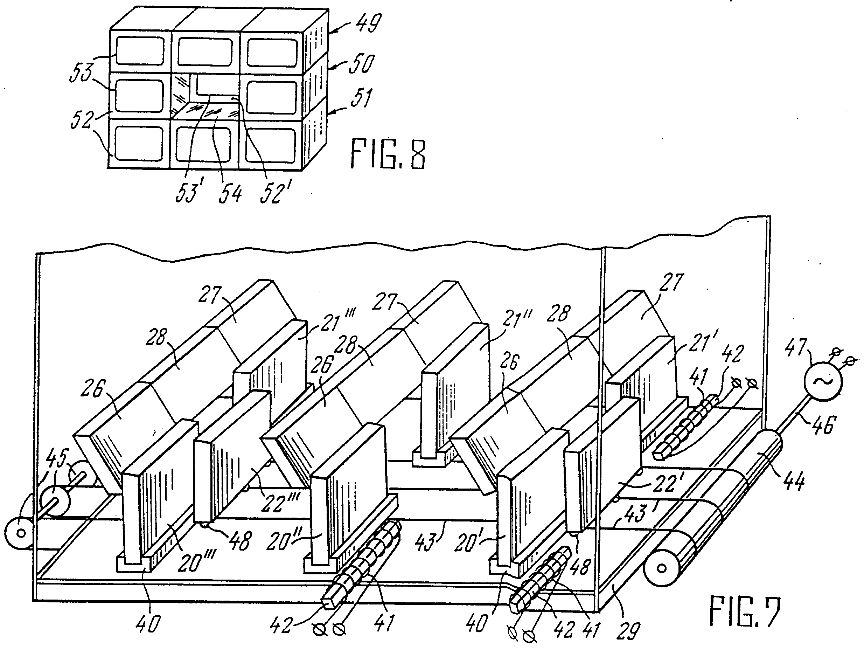

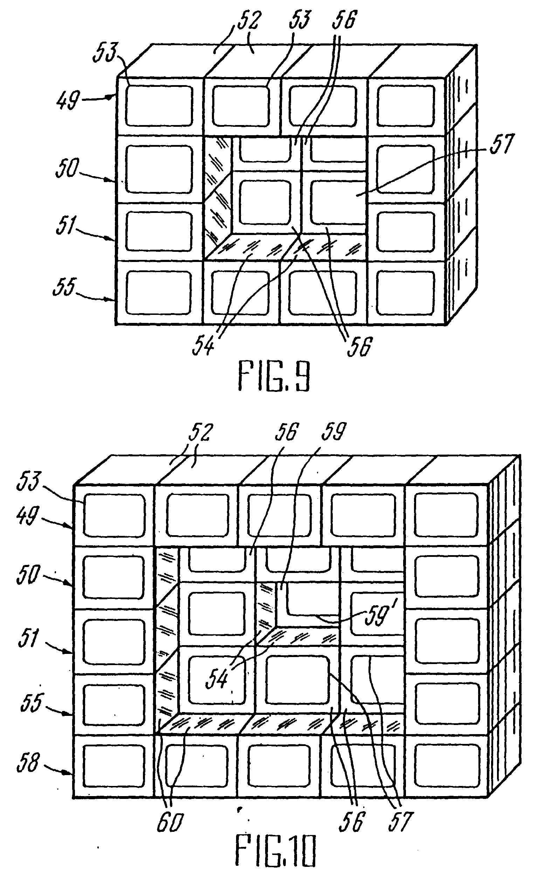

At least two more television sets 26, 27 are positioned above the television sets 20, 21 (FIGS. 4 and 5) to form a "visor" above the single television screen, which may be arranged so that the screens of the television sets 26, 27 are either in a vertical plane or make an angle with the screens of the television sets 20, 21.

Similarly such a "visor" made up of the two television sets 26, 27 is positioned above each of the pairs of the television sets 20' and 21', 20'' and 21'', 20''' and 21'''.

Use of said "visor" composed of the television sets 26, 27 adds to the amount of information delivered at a time, and enhances subjective viewers' effect of artistic and informative impression and the participation effect. In addition, the mode of information presenting is modified.

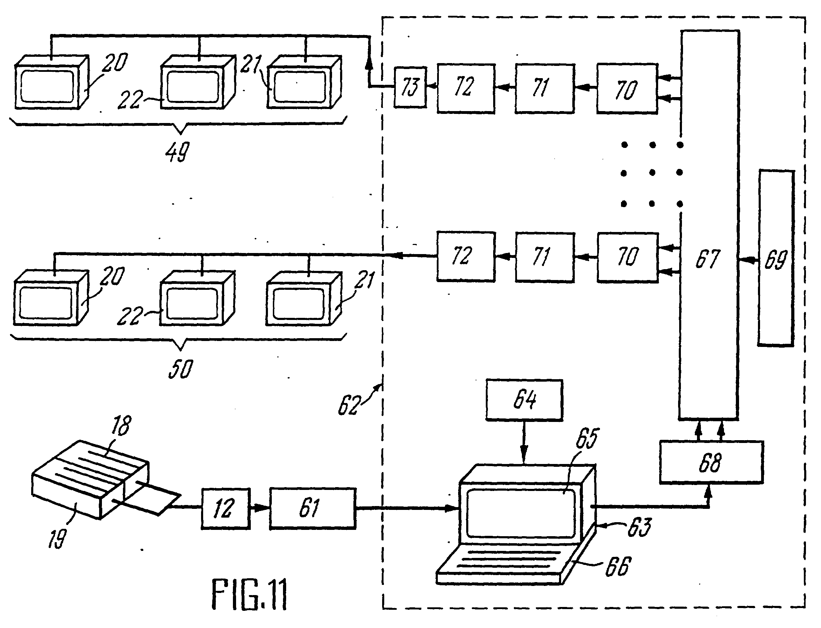

FIG. 6 presents one of possible practical embodiments of an information complex, comprising three pairs of the television sets 20' and 21', 20'' and 21'', 20''' and 21''', one additional television set 22 located behind the extreme television sets 20''' and 21''', and two "visors" situated above the middle pair of the television sets 20'' and 21'' and the extreme pair of the television sets 20''' and 21''', said "visors" being formed by three television sets 26, 27, and 28 arranged in a single row and in an inclined position towards the respective pair. All the television sets 20 and 21, as well as the television set 22 are mounted on a common baseplate 29 to which is held a framework 30 that defines the stage space.

The framework 30 mounts ways 31, 32, and 33 from which the television sets 26, 27, and 28 forming the "visor", are suspended by tie-rods 34. For the television sets 26, 27, and 28 to be turned relative the television sets 20 and 21, an articulated joint 35 is provided on the cabinet of each of the television sets 26, 27, and 28, said joint 35 being adapted to interact with the respective tie-rod 34 and having hinges 36, 37 held to the cabinet of the television set 26 (or 27, or 28), a cramp 38 linked to the hinges 36 and 37, and a hinge 39 on the cramp 38, linked to the tie-rod 34.

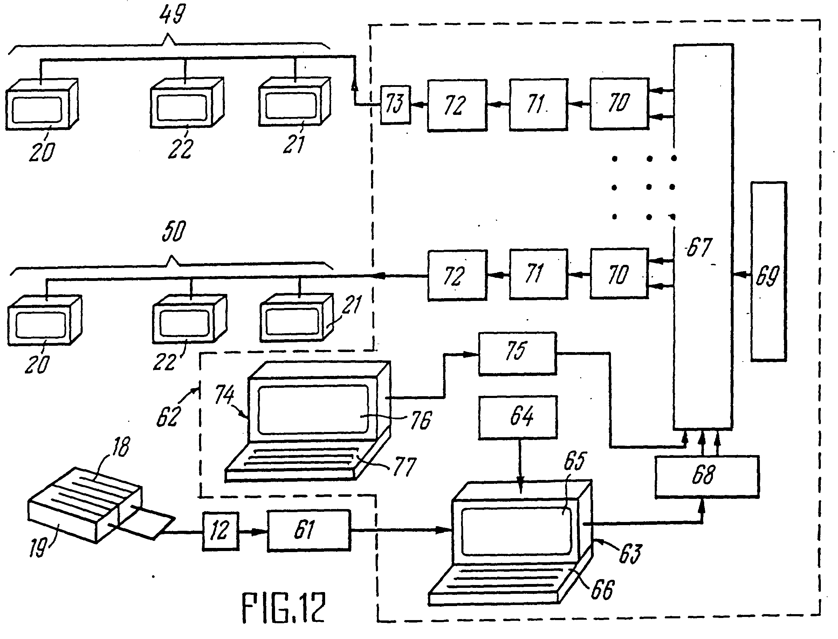

The television sets 20, 21 are horizontally displaceable (that is, over a baseplate 29) by means of devices shown in FIG.7. Each of the television sets 20, 21 has a support 40 made of a magnetizable material. Located beneath the support 40 are electromagnets, each comprising a coil 41 and a core 42, both interacting with the supports 40 of the television sets 20 and 21.

The television set 22 is displaceable through cables 43 wound onto a drum 44 through blocks 45. A shaft 46 of a reversible electric motor 47 is connected to the drum 44, and the cables 43 are held to the television set 22 provided with trundles 48.

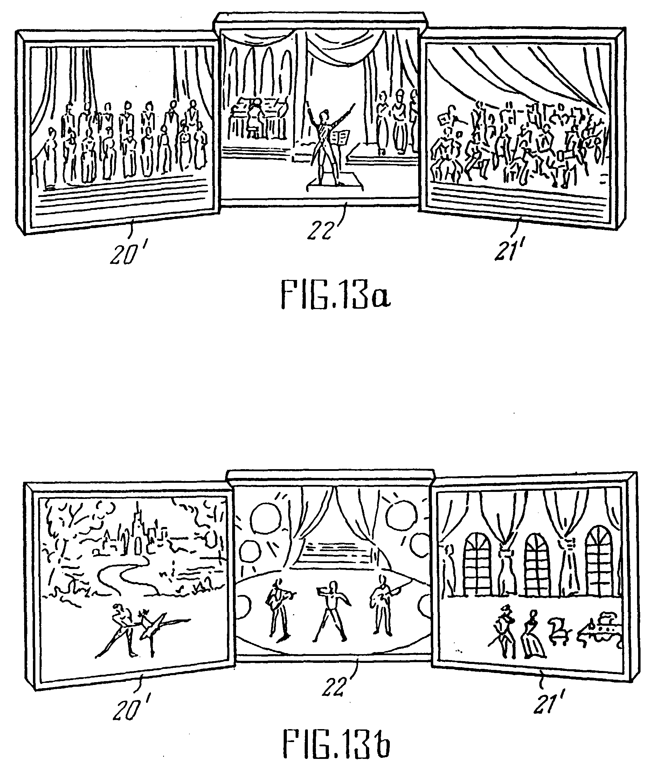

FIGS. 8, 9, and 10 display matrices made up of three, four, and five horizontal rows of television sets the number of which in a row corresponds to the number of rows in the respective matrix.

A matrix (FIG.8), comprising three horizontal rows 49, 50, and 51 has three television sets 52 in each row. Screens 53 of all the television sets 52 are vertically coplanar.

A television set 52' (FIG.8) is so arranged relative to the other television sets 52 that its screen 53' lies in another vertical plane that forms the second ground with respect to the plane of the screens 53 of the entire matrix. The cabinets of those television sets 52 which surround the television set 52', have their surfaces facing the latter set mirror-reflecting. To this end, e.g., a surface 54 is coated with a layer of a reflecting material or is provide with mirrors equal in size with the surface 54.

FIG.9 illustrates a matrix composed of four horizontal rows 49, 50, 51, and 55, each having four television set 52. Four television sets 56 are located in the center of the matrix, screens 57 of said sets being located in the second ground with respect to the screens 53 of the entire matrix. The screens 57 of the television sets 56 lie in the same vertical plane parallel to the plane of the screens 53 of the matrix.

The surfaces 54 of the television sets 52 surrounding the central group of the television sets 56 and facing said group, are also mirror-reflecting.

In an embodiment presented in FIG.10 the matrix is built up of five horizontal rows 49, 50, 51, 55, and 58, each having five television sets 53. The central group is composed of nine television sets 56 situated in the second ground and having their screens 57 in the same vertical plane parallel to the plane of the screens 53.

A television set 59 in the center of a group of the television sets 56 is so arranged that its screen lies in a vertical plane parallel to the planes of the television sets 52 and 56, thus being in the third ground.

The group of the television sets 56, 59 is thus similar to the matrix shown in FIG.8. The surfaces 54 (FIG.10) of the cabinets of those television sets 56 which surround the television set 59, are mirror-reflecting. Similarly, surfaces 60 of the cabinets of the television sets 52 surrounding the group of the television sets 56, 59 are also mirror-reflecting.

The programmable control device comprises a converter 61 (FIG.11) for converting an analog video signal into a digital code, which is connected, through its input, to the video tape recorders 18, 19, and a digital computer 62 connected to the output of the converter 61 and producing, in accordance with a preset program, a video signal for the television sets 20, 21, and 22.

The computer 62 comprises a divider 63 of a video signal into separate fragments, one input of which is connected to the output of the converter 61 and the other input, to an image accelerator 64. The video-signal divider 63 has a monitor 65 which displays an image corresponding to a preset fragment, and a unit 66 of programmable control over operation of the image accelerator 64.

A network memory unit 67 is connected to the output of the video-signal divider 63 through an intermediate memory unit 68.

A programmable control circuit 69 is connected to the control input of the network memory unit 67, and a plurality of channels for transmission of the respective picture fragments are connected to the outputs of the memory unit 67. The number of said channels corresponds to the number of the television sets 20, 21, and 22 in the multichannel video information apparatus, or to the number of the rows 49, 50 into which said television sets 20, 21, and 22 are integrated.

Each of said channels comprises an input network board 70 having its input connected to the output of the memory unit 67, a converter 71 for converting a digital code into an analog video signal that corresponds to a fragment of video information, and a video-signal reader unit 72 connected, through its input, to the output of the converter 71 which in turn is connected, through its input, to the output of the board 70. The output of the reader unit 72 is connected, either directly or through a video-signal amplifier 73, to the television sets 20, 21, and 22.

FIG. 12 presents an alternative embodiment of the proposed video information apparatus which comprises a unit 74 for producing graphic information according to a preset program and a graphic information converter unit 75. The output of the unit 74 is connected to the input of the unit 75 whose output is connected to the input of the memory unit 67. The unit 74 is in fact a display 76 with a control panel 77.

The video information apparatus of the present invention is used as follows.

A program of control of the information complex is prepared in keeping with producer's conception and is then entered into the programmable control device 10. Next the sources of an image are selected, e.g., the image is delivered to the television sets 2, 3, 4, and 5 from the video tape recorders 18, 19. In addition, a single television screen is created from a number of the television sets 20', 20'', 20''', 21', 21'', 21''', and 22. For instance, the television sets 20' and 21' are turned in opposite directions and set apart from each other a distance approximately equal to the width of the screen of the television set 22, which is displaced relative to the baseplate 23 by means of the device for imparting motion thereto (shown in FIG.6 or 7). Thus, the television set 22 is positioned behind the television sets 20', 21' in the space confined therebetween.

Then each of the television sets 20', 21', and 22 receives its own image delivered from the video tape recorders 18, 19. Thus, the screen of the television set 20' displays a chorus (FIG.13a), or an episode from a ballet performance (FIG.13b); shown on the screen of the television set 21' is an orchestra (FIG.13a), or an episode from a performance; and the screen of the television set 22 shows a conductor (FIG.13a), or a musical ensemble (FIG.13b), that is, the amount of information presented to the audience at a time is increased. It is in a similar way that a close-up picture is produced simultaneously with a simultaneous demonstration of a general view.

An analog video signal corresponding to the television picture and delivered from the video tape recorders 18, 19, is converted, in the course of image generation, into a digital video signal in the digital converter 61 and is applied to the divider 63 to be divided there into separate fragments in accordance with the program preset by the operator from the programmable control circuit 66. The results of the division of the video signal, i.e., the individual fragments are watched and monitored by the operator against the screen of the monitor 65.

At operator's discretion the rate of transfer of an image or individual fragments thereof can be changed by the image accelerator 64.

The resultant image and individual fragments thereof are applied, as a digital signal, to the intermediate memory unit 68 and the network memory unit 67, whence the signal corresponding to the video picture or the fragments thereof, is delivered, in accordance to the required program, to the respective channels for transmitting image fragments.

In each channel the digital signal is applied, through the input network board 70, to the converter 71 of a digital code into an analog video signal which is read by the reader unit 22 which is in fact a signal adapter. The read-out video signal corresponds to an image fragment required for a given channel and is applied to one television set or to a preset combination of the television sets 20, 21, and 22. In accordance with the program, said video signal can be enhanced by the video-signal amplifier 73.

Thus, the operator can produce an image from the video-tape recorders 18, 19 on the television sets 20, 21, and 22 in keeping with the producer's conception, whereby the mode and concept itself of information presenting is modified and hence the field of application of television sets is extended, too, in particular, for establishing large information complexes, which allow to demonstrate information to a large audience at a time. Moreover, psychological and emotional effects on the audience is enhanced due to new concepts of information presenting involving such possibilities that are at present unattainable by both cinematography and television.

The demonstrated information is easy to combine with a picture produced by the computer graphics technique. The graphic information producing unit 74 enables one to create graphic information in accordance with the producer's conception, and the graphic information converter unit 75 converts said information into a digital code and transfers it to the network memory unit 67, whence the graphic information is delivered to a respective channel for transmitting picture fragments according to a program preset by the control unit 69. As a result, an unexpected and extraordinary subjective viewers' effect is attained, which adds to the emotional perception of the picture displayed on the screens of television sets.

The present video information apparatus can be built around the heretofore-known circuitries and elements of the computing facilities and may use known television sets and other devices. The proposed video information apparatus will help change the existing information and entertainment measures and shows by rendering them emotionally richer and attaining an extraordinary viewers' effect.

The present video information apparatus makes it possible to simultaneously control a number of television sets or televideoprojectors, carry out an instantaneous presenting of a picture on a number of television sets, as well as to integrate a number of individual video frames into a whole two- and/or three-dimensional picture, and/or perform spatial motion of the thus-created picture in a unit time.

### Industrial applicability of the invention

The invention can find application in television studios, information-and-entertainment business, including theaters, cinema- and concert halls, as well as in advertising and show-rooms, simulators, and other similar arrangements and systems, comprising diverse combinations of screen systems.

## Claims

1. A video information apparatus, comprising a multisection screen (1) having at least two cells, each of them being spatially turnable and/or displaceable in at least one direction, and which establish a spatially changeable three-dimensional multiplane screen system, wherein each of the cells of the multisection screen (1) or any combination of said cells receives its own information from at least one source (16 - 19) of information, CHARACTERIZED in that each of the cells of the multisection screen (1) is essentially at least one television set connected to a programmable control device (10) to which the sources of image (16 - 19) corresponding to each television set (2 - 5) are connected through a video distributor (12).

2. A video information apparatus according to claim 1, CHARACTERIZED in that when two or more television sets (20, 21, 22) are provided in each cell, they establish a matrix of television sets, comprising at least one horizontal row of two or more television sets.

3. A video information apparatus according to claim 2, CHARACTERIZED in that two television sets (20, 22) in each matrix are positioned in the foreground and spaced somewhat apart from each other, and that their screens are vertically coplanar, and a third television set (22) is located in the second ground and its screen occupies at least partly the space between the two television sets (20, 21) located in the foreground.

4. A video information apparatus according to claim 3, CHARACTERIZED in that the two television sets (20, 21) situated in the foreground are baseplate-mounted with a possibility of simultaneous swiveling about vertical axis in opposite directions.

5. A video information apparatus according to claim 3 or 4, CHARACTERIZED in that the two television sets (20, 21) situated in the foreground are baseplate-mounted with a possibility of simultaneously moving in a horizontal plane.

6. A video information apparatus according to any one of claims 3 to 5, CHARACTERIZED in that the third television set (22) located in the second ground is displaceable either horizontally or vertically.

7. A video information apparatus according to claim 5, CHARACTERIZED in that the third television set (22) located in the second ground is displaceable either horizontally or vertically.

8. A video information apparatus according to claim 2, CHARACTERIZED in that the matrix of the television sets is formed by three pairs of television sets (20' and 21', 20'' and 21'', 20''' and 21''') placed on a common baseplate pairwise, one set being spaced somewhat apart from the other, and one pair behind the other, and that it comprises also at least one additional television set (22) interposed between the sets of the same pair and displaceable in the plane of the common baseplate (23) from one pair of the television sets to other pairs, while the screen of said additional television set occupies at least partly the space between the screens of the television sets (20, 21) of the respective pair.

9. A video information apparatus according to claim 8, CHARACTERIZED in that the additional television set (22) is vertically movable.

10. A video information apparatus according to claim 3, CHARACTERIZED in that at least two television sets (26, 27) are positioned above the two foreground television sets (20, 21) in such a manner as to form a "visor".

11. A video information apparatus according to claim 8, CHARACTERIZED in that at least two television sets (26, 27) are positioned above any one of the pairs of television sets (20' and 21', 20'' and 21'', 20''' and 21''') in such a manner as to form a "visor".

12. A video information apparatus according to any one of claims 10 and 11, CHARACTERIZED in that the television sets (26, 27) forming the "visor" are tiltable.

13. A video information apparatus according to claim 2, CHARACTERIZED in that the matrix of the television sets has at least three horizontal rows (49, 51) arranged one above another, each row comprising at least three television sets (52) having coplanar screens (53), the screen (53') of one or of a group of the television sets (52') situated in the center of the matrix lie in the plane forming the second ground with respect to the plane of the screens of the television sets the matrix is comprised of, and the surfaces (54) of the cabinets of the television sets (52) that surround the central television set (52') or a group of the central television sets, are mirror-reflecting.

14. A video information apparatus according to claim 2, CHARACTERIZED in that the matrix has five horizontal rows (49 to 51, 55, 58) each comprising five television sets (52), and the central group formed by nine television sets (56) has in its center one television set (59) whose screen is situated in the third ground with respect to the screens of the television sets the matrix is comprised of, and the surfaces (54 and 60) of the cabinets of the television sets (52, 46) surrounding said central television set and facing the latter are mirror-reflecting.

15. A video information apparatus according to any one of claims 1, 2, 3, 4, 8, 9, 10, 11, 13, 14, CHARACTERIZED in that the programmable control device (10) comprises a converter (61) for converting an analog video signal into a digital code, which is connected to a source (18, 19) of video image, a digital computer (62) connected to the output of said video-signal analog-to-digital converter (61) and producing a video signal for a respective television set (20, 21, 22) of the video information apparatus, said computer comprising a divider (63) of a video signal into separate fragments, connected to the output of the said video-signal analog-to digital converter (61), a network memory unit (67) connected to the output of the video-signal divider (63) and having a programmable control circuit (69), and a plurality of channels for transmitting the respective fragments of video information onto the own screen of the respective television set (20, 21, 22), the number of said channels corresponding to the number of television sets in the video information apparatus, each of said channels comprising an input network board (70) connected to the output of the network memory unit (67), a converter (71) for converting a digital code into an analog video signal that corresponds to a fragment of video information, said converter being connected to the output of the input network board (70), and a video-signal reader unit (72) connected to the output of said video-signal digital-to-analog converter (71) and to the input of the respective television set (20, 21, 22).

16. A video information apparatus according to claim 15, CHARACTERIZED in that the digital computer (62) comprises a graphic information producing unit (74) and a graphic information converter unit (75) whose input is connected to the output of the graphic information producing unit (74), and the output thereof is connected to the input of the network memory unit (67).
